# EUROPEAN PATENT APPLICATION

(11) **EP 1 625 782 A1**
(43) Date of publication of application: **15.02.2006**
(21) Application number: 05005543.3
(22) Date of filing: 15.03.2005
(51) Int. Cl.: A01C 7/10

(54) **Control and command electromechanical installation for seed and fertilizer dosing with variation capability during seeding**

(30) Priority: 13.08.2004 AR 0402927
(71) Applicant: Cuffia, Abelardo Atilio, Cordoba (AR)
(72) Inventor: Cuffia, Abelardo Atilio, Cordoba (AR)
(74) Representative: Isern-Jara, Nuria

(57) **Abstract**

Disclosed is a command and control installation fit to carry out variable dosing, either manually or through the information obtained from a pre-established dosing geo-referenced map, as well as to control dosing on a continuous basis, so that, if on account of any mechanical or any other type of reason, the pre-established relation tends to change, it shall automatically correct the same. The invented installation comprises the use of a speed variation box (v) that relates an input shaft (1) (the angular speed of which is proportional to the seeder and/or fertilizer machine drive wheel speed) and an output shaft (5) (the angular speed of which is proportional to the amount of seed or fertilizer to be applied), including an intermediate relation change shaft (7) the angular displacement of which exerts an influence on the angular displacement of said third shaft or output shaft (5). The novelty lies in the fact that said intermediate shaft (7) is coupled to an electric actuator integrated to a circuit commanded from a command electronic controller (C), to which the corresponding speed electric meters (2,3), linked to said speed variation box (v) input (1) and output (7) shafts, are also integrated.

## Description

The main object of present patent of invention is a CONTROL AND COMMAND ELECTROMECHANICAL INSTALLATION FOR SEED AND FERTILIZER DOSING WITH VARIATION CAPABILITY DURING SEEDING, a device which, fitted to different models of grain seeders and fertilizer units available in the market, enables said machines to achieve a variable dosing, either on a pre-established basis through a dose map or manually from the operator's cabin.

Specifically, this patent of invention protects an electromechanical installation for automatically controlling the operation of a speed variation box that establishes a relation between the machine forward speed and the machine dosing equipment controls.

The object of this invention is to provide an installation capable of automating the operation of said variation box and thus achieving an automated variable dosing by the seeder and fertilizer machine.

### PRIOR ART

Various mechanical dosing installations currently incorporated into most of the grain seeders and/or fertilizer machines are known at present.

Based on their features it may be stated that they carry out a fixed or static dosing, since the quantity of fertilizer or seeds per unit area to be released on a specified place must be established beforehand.

These installations, through a gearbox or a combination of chain-linked gears, establish a relation between the drive wheel angular speed providing motion to the entire dosing command and the speed inherent to said command in order to establish the dose to be distributed per unit area during the forward movement.

They present a drawback, however, since said regulation process must be carried out when the machine is halted, so that, if for any reason a change in the dosing is desired, the operator must stop the machine, get out of it and change the relation between the drive wheel angular speed and the dosing equipment command.

In many cases, this regulation process, besides causing a substantial time loss, is not safe enough because dosing failures invariably occur when the machine is not operating within a set speed range.

With these dosing systems many stops are required in order to vary dosing until it is suitable to the effective speed range that we have called seeding speed.

Consequently, it may be stated that with the aforesaid regulation mechanical systems, variable dosing is not possible.

Furthermore, there are hydraulic installations which, fitted to different seeders and/or fertilizer machines, allow for a variable dosing to be accomplished. These installations comprise hydraulic motors that transmit movement to the seeding and/or fertilization command. Said motors are regulated by means of hydraulic valves which allow for a gradual variation of the speed according to the pre-established dose and to the machine forward speed information, often supplied by a speed radar to some other equivalent element capable of measuring and reporting said forward speed.

The main drawback of these hydraulic systems is that the entire drive comes from the tractor hydraulic pump towing the machine at that moment. There is a large number of different tractors and hydraulic pumps currently available in the market. This generates the problem that on many occasions, with certain types of tractors, the necessary speed and hydraulic fluid flow requirements called forth by the installation in order to operate on a proper basis, are not met. The hydraulic power furnished by the tractor is not sufficient.

In fact, it may happen that the user finds a fluid dynamic installation specifically designed for a certain tractor type or model, but when the use of the same machine with another tractor model is sought, the installation may fail to operate or may require further adjustment, since the hydraulic pump included in this other tractor does not meet the necessary requirements.

Another drawback is that, in several cases, important modifications in the very same seeder need to be carried out beforehand, since the whole of the mechanical transmission, the gearbox and the drive wheel must be removed in order to further install an entirely new hydraulic set, motors, valves, hoses and couplings, as well as a considerable hydraulic fluid tank, plus an element to measure the travel speed, e.g. a speed radar.

### Advantages of the system invented

With the electromechanical installation referred to in present patent of invention, the source of the problems mentioned above is eradicated, since a minimal installation, perfectly suited to practically all seeders and fertilizer machines known in the market, is used.

In fact, this is a new command installation only requiring the replacement of the pre-existing gearbox; no other modification needs to be carried out in the machine.

Moreover, the combination of the elements comprising the invented installation is minimal and very simple to install.

Another advantage is that the dosing command and control mechanism installed is entirely autonomous, so that it is does not depend on the tow tractor type or model being used. It may be used with any other tractor model, since the only power source needed is the electricity coming from its own accumulator or battery, which is a standard element in all tractors at present available in the market.

It is also pointed out that the invented installation envisages the possibility of carrying out variation operations on a manual basis, should the electronic control part suffer any damage, thus becoming a conventional system which allows for an uninterrupted use of the machine until repair of the control mechanism is completed, something that cannot be done in the case of a hydraulic system.

### NOVELTY OF THE INVENTION - MAIN OBJECT

The advantages stated above are a direct consequence of the special constructive and functional embodiment defining the invented installation, represented by the utilization of a variable speed box capable of obtaining the desired turn ratio between an input shaft, the angular speed of which is proportional to the seeder and/or fertilizer machine drive wheel speed, and, thus to the machine travel speed, and an output shaft the angular speed of which is proportional to the amount of seeds or fertilizer to be applied.

Thus an input shaft to output shaft angular speed relation is established, which indicates a value that is proportional to the seeding dose employed per unit area. In turn, the very same box includes an intermediate shaft, the angular displacement of which exerts an influence on the angular displacement of said third shaft or output shaft. It is a relation change shaft incorporated into the very same variation box.

This means that by varying the angular displacement of said intermediate shaft a variation in the seeding dose being applied is obtained.

It is important to make it clear that the variation achieved by this box is of a continuous kind, and not of a stepped kind, as is the case of a conventional gear box; thus, a continuous variation of the dose per unit area may be achieved, increasing the discrete dosing achieved by a conventional gearbox.

By using the speed variation box stated above, the invented installation establishes the use of an electric motor fed from the power accumulator included in the tow tractor, the output shaft of which is linked to said intermediate shaft providing the relation change in the variation box.

Thus the incorporation of an electric command by means of which it is possible to change the relation between the box input and output shaft, and therefore, to achieve a dosing change just by providing electric energy to a drive motor, is provided.

The installation invented also includes special sensors connected with the variation box input and output shafts, the object of said sensors being the incorporation of an information source capable of individually measuring the angular speed of each.

The installation invented is completed with the inclusion of an electronic controller, specially designed to store and read the dosing data established in each case, data that may be entered manually from the operator's cabin or from a previously prepared geo-referenced dosing map

From this electronic controller, linked to the aforesaid sensors associated to the shafts, it is possible to know the individual angular speed of each and, consequently, to operate the electric motor that will carry out the intermediate shaft angular displacement providing the relation change between the output shaft and the input shaft.

Therefore, the main object of the present invention may be defined as a CONTROL AND COMMAND ELECTROMECHANICAL INSTALLATION FOR DOSING SEEDS AND FERTILIZERS WITH VARIABLE CAPABILITY DURING THE SEEDING, fit to carry out a variable dosing, either manually or based on the information obtained from a pre-established geo-referenced dosing map, as well as to control dosing on a continuous basis, so that, if the pre-established relation tends to be modified on account of a mechanical failure or any other type of shortcoming, it shall automatically correct the same.

The installation invented comprises the use of a speed variation box of the type that relates an input shaft, (the angular speed of which is proportional to the speed of the seeder and/or fertilizer machine drive wheel), and an output shaft (the angular speed of which is proportional to the amount of seeds or fertilizer to be applied), with the insertion of an intermediate shaft, incorporated into the variation box, the angular displacement of which exerts an influence on the angular displacement of said third shaft or output shaft.

The novelty lies in the fact that said intermediate shaft is coupled to an electric actuator integrated to a circuit controlled from an electronic controller, to which the corresponding speed electric meters linked to the speed variation box input and output shafts are also integrated.

It is pointed out that the electric actuator is an electric motor fed from an energy accumulator, the output shaft of which is coupled to the intermediate shaft of the speed variation box providing the relation change between the input shaft and the output shaft thereof.

It is also pointed out that the electric speed meters connected to the variation box input and output shafts, are speed electric sensors integrated to an electronic circuit feeding the control electronic controller.

Moreover, it is pointed out that the command electronic controller is capable of storing the dosing parameters that are scheduled, either manually or by means of a geo-referenced map, in order to control the electric actuator operation.

### BRIEF DESCRIPTION OF THE DRAWINGS

In order to embody the advantages briefly described herein, to which many others may be added by users and experts in the art, and to facilitate the understanding of the constructive, constitutive and functional features of the invented installation, a preferred example of an embodiment, illustrated on a schematic basis and not to a predetermined scale, is described hereunder, on the enclosed sheets, expressly making clear that, as it is an example, the allocation of a limitative or exclusive character, as regards the protection scope of this patent of invention is concerned, is not applicable, but rather a merely explanatory and illustrative intention of the basic conception on which the same is based.
Figure 1 is a schematic diagram detailing the overall operation of the invented installation.
Figure 2 is a perspective view showing the invented installation as observed based on the external aspect thereof.
Figure 3 includes three positional views of the speed variation box that includes the installation of this invention.

It is clarified that, in all figures, equal reference numbers and characters are in correspondence with equal or equivalent constitutive parts or elements in the assembly, according to the example chosen to explain the invented installation.

### DETAILED DESCRIPTION OF A PREFERRED EXAMPLE

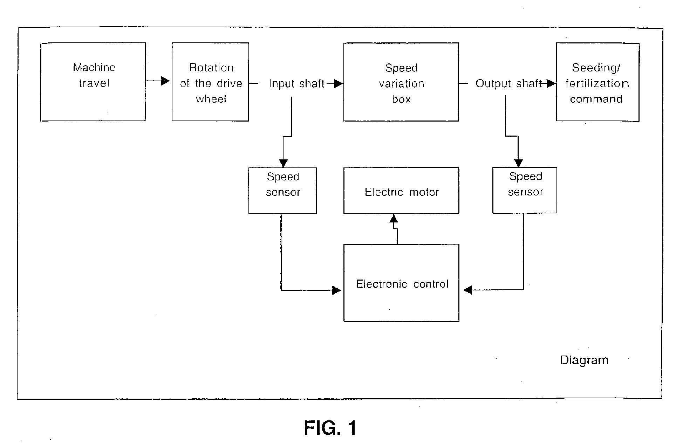

As may be observed in Figure 1, the block diagram representing the invented installation comprises the machine displacement block, caused by the tractor towing movement, an effect that causes the rotation of the drive wheel supplied on the seeder, which, in turn is translated to the speed variation box input shaft; therefore, the machine travel speed will be proportional to the input shaft angular speed. As represented on the diagram, this proportion is given by a constant depending on the seeder model but that, however, will always be fixed.

It may also be observed that associated to said input shaft, there is a rotation speed sensor in place, the object of which is to report to the electronic controller the speed at which it is rotating, and, therefore, to allow for the machine travel speed to be known.

Also, the speed variation box output shaft is the one actuating the seeding/fertilization command, which is also associated to a speed sensor the purpose of which is to report to the electronic control the revolutions thereof, and thus to allow for the dose being applied each time to be known.

The electric motor representative block may also be observed on the same diagram, said electric motor block, linked to the speed variation box intermediate shaft, being in charge of setting the relation between the input and output shaft speed. This motor is operated from the electronic controller, wherefrom the required dose is scheduled in order for said motor to provide the corresponding revolutions to the intermediate and output shafts for the purpose of achieving said dose.

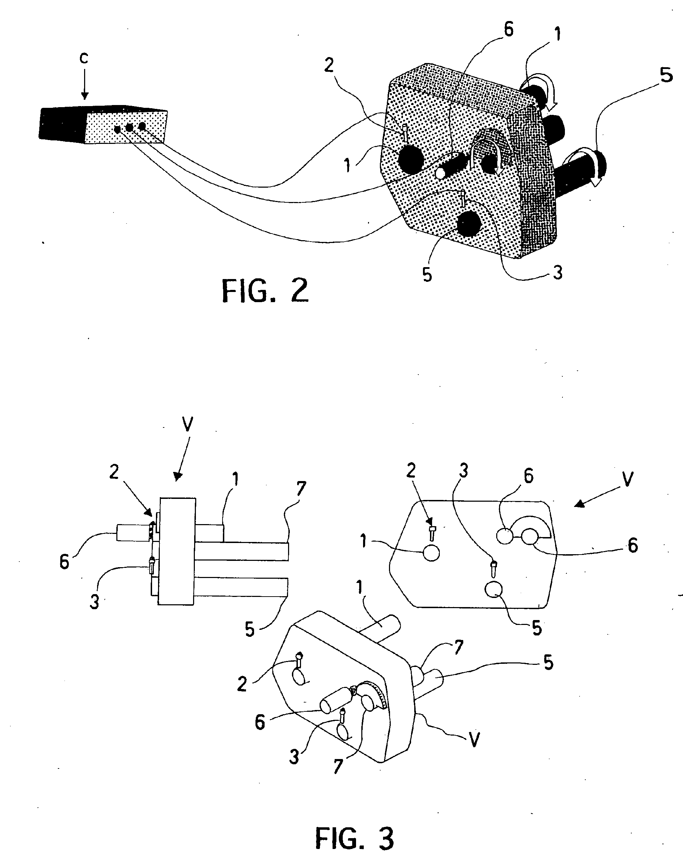

Observing now Figures 2 and 3, the above mentioned components of the invented installation, which define a novel combination of means originating the aforesaid advantages, may be appreciated.

The first datum to bear in mind is the desired dose to be applied, a piece of information that must be reported to the electronic controller (C), either entering the datum by means of the keyboard through any other electronic device capable of recording a geo-referenced dose map produced beforehand for a pre-established seeding.

As mentioned above, through input sensor (2) and output sensor (3) said electronic controller (C) knows the angular speed of each shaft (1) and (5) respectively, these data being sufficient for the electronic program to act over the electric motor (6) making it rotate in one sense or another, until the dose to be set is matched, this rotation of the motor shaft (6) producing an angular displacement of the speed variation box (v) relation change intermediate shaft (7), and thus resulting in a change in shaft (1) and (5) speed relation, said relation to remain constant as long as the same pre-established dose value is maintained.

Based on the aforementioned conditions, the pre-established relation is controlled on a continuous basis by the electronic module included in said controller (C), so that, if owing to some mechanical or any other reason, the pre-established relation tends to change and alters the dose, the controller (C) will automatically correct the same, since it shall be permanently informed about the speed of each shaft through the sensors, and this deficiency can be corrected actuating over the motor, something which usually is called closed loop or feedback control system.

Of course, it arises from the above statement that, with the invented installation it is possible to achieve a variable dosing, i.e., to vary the dosing of either seeds or fertilizer while the machine is operating. Said novel functional advantage is embodied just by introducing into the control module another value, specifying the desired dose, and the entire mechanism will act automatically to make this change, maintaining this value until it is replaced for by another one, and, therefore allowing for the dosing to vary without giving rise to machine any functional drawback.

## Claims

1. A CONTROL AND COMMAND ELECTROMECHANICAL INSTALLATION FOR SEED AND FERTILIZER DOSING WITH VARIATION CAPABILITY DURING SEEDING, fit to carry out the variable dosing, either manually or based on the information obtained from a pre-established geo-referenced dosing map, as well as to control dosing on a continuous basis, so that, if owing to any mechanical or any other type of reason, the pre-established relation tends to change, it will automatically correct the same; for that purpose it includes the use of a speed variation box of the type that relates an input shaft, (the angular speed of which is proportional to the speed of the seeder and/or fertilizer machine drive wheel), and an output shaft the angular speed of which is proportional to the amount of seeds or fertilizer to be applied, with the inclusion of an intermediate relation change shaft, the angular displacement of which exerts an influence on the angular displacement of said third shaft or output shaft, wherein said intermediate shaft is coupled to an electric actuator integrated to a circuit controlled from a command electronic controller, to which the corresponding speed electric meters connected to the speed variation box .input and output shafts, , are also integrated.

2. The CONTROL AND COMMAND ELECTROMECHANICAL INSTALLATION, as claimed in claim 1, wherein the electric actuator is an electric motor powered from an energy accumulator, the output shaft of which is coupled to the intermediate shaft of the speed variation box that provides the relation change between the input shaft and the output shaft thereof.

3. The CONTROL AND COMMAND ELECTROMECHANICAL INSTALLATION, as claimed in claim 1, wherein the speed electric meters linked to the input and output shafts of the variation box, are speed electric sensors integrated to an electronic circuit that powers the command electronic controller.

4. The CONTROL AND COMMAND ELECTROMECHANICAL INSTALLATION, as claimed in claim 1, wherein the control electronic controller is capable of storing the scheduled dosing parameters, either manually or through a geo-referenced map, in order to command the operation of the electric actuator.
